# EUROPÄISCHE PATENTSCHRIFT

(11) **EP 0 598 200 B1**
(45) Veröffentlichungstag und Bekanntmachung des Hinweises auf die Patenterteilung: **13.11.1996**
(21) Anmeldenummer: 93115219.3
(22) Anmeldetag: 22.09.1993
(51) Int. Cl.: B60P 1/28

(54) **Abstützvorrichtung für Ladepritschen von Fahrzeugen**
Support device for tipping body for vehicles
Dispositif de support pour benne basculante de véhicule

(30) Priorität: 16.11.1992 DE 4238590
(43) Veröffentlichungstag der Anmeldung: 25.05.1994
(73) Patentinhaber: HANS ADOLF LEISINGER MASCHINENBAU, D-79395 Neuenburg (DE)
(72) Erfinder: Leisinger, Hans-Adolf, D-79395 Neuenburg (DE)
(74) Vertreter: Schmitt, Hans, Dipl.-Ing.

(56) Entgegenhaltungen:
- CH-A- 407 772
- DE-B- 2 907 676
- DE-U- 1 776 675
- DE-U- 1 831 500
- DE-U- 1 862 682
- DE-U- 1 950 106

## Beschreibung

Die Erfindung betrifft eine Abstützvorrichtung für eine um wenigstens eine Schwenkachse kippbare Ladepritsche oder dergleichen eines Fahrzeuges gemäß dem Oberbegriff von Patentanspruch 1.

Eine derartige Abstützvorrichtung ist aus der DE-A-1 630 694 bekannt. Zur Geräuschdämpfung der abgesenkten Ladepritsche dient eine druckknopfartige, aus dämpfendem Werkstoff bestehende Rastvorrichtung, die benachbart zu der Abstützvorrichtung angeordnet ist. Dies bedeutet einerseits einen zusätzlichen Aufwand und andererseits bewirken zum Beispiel durch Temperaturschwankungen auftretende Längenänderungen an dieser den Dämpfungskörper aufweisenden Rastvorrichtung Beschädigungen, so daß sie relativ häufig ersetzt werden muß.

Solche Temperaturschwankungen können beispielsweise durch Beladen der Ladepritsche mit heißem Straßenbelag oder dergleichen und/oder bei Außentemperaturschwankungen auftreten und wirken sich vor allem bei sehr langen Ladepritschen ab etwa 5 m Länge stark aus. Insbesondere auch bei Ladepritschen, die im Unterschied zum Fahrgestell häufig aus Gewichtsgründen aus einer Aluminiumlegierung gefertigt sind und dadurch ein anderes thermisches Ausdehnungsverhalten aufweisen, ergeben sich bei Außentemperaturschwankungen und/oder bei Beladung der Ladepritsche mit heißem Straßenbelag oder dergleichen Längenänderungen der Ladepritsche. In Abstützposition können dabei diese Abstützvorrichtungen noch durch einen Sperrbolzen gesichert werden. Wegen der Möglichkeit von Längenänderungen und aus herstellungstechnischen Gründen ist in dieser Abstützvorrichtung ein relativ großes Spiel vorgesehen, welches die unterschiedlichen Toleranzen und durch unterschiedliche Temperaturen bedingte Längen einer Ladepritsche auffangen und ausgleichen kann. Dies führt jedoch im Fahrbetrieb zu erheblichen Klappergeräuschen und außerdem auch zu einer erheblichen Belastung der miteinander gekuppelten Teile der Abstützvorrichtung, wodurch diese nach und nach ausgeleiert und ausgeschlagen werden können.

Aus DE-B-2 907 676 ist bereits ein walzenförmiger Druckkörper aus zusammendrückbarem Werkstoff bekannt, der als Dämpfungskörper unmittelbar eine als Schwenklager dienende Kugel untergreift. Ein zylindrischer oder walzenförmiger Druckkörper kann mit einer Kugel aber nur über einen bestimmten Längenbereich zusammenwirken. Außerdem muß bei jedem Schwenkvorgang der Druckkörper der nicht gelösten Seite der Ladepritsche an der Kugel reiben, was zu einem Verschleiß und einer schwergängigen Bewegung führen kann.

Aus DE-U-1 950 106 ist eine Niederspannvorrichtung für die Plattform von Kippfahrzeugen bekannt, bei welcher ein Dämpfungselement und ein U-förmiges Gegenstück miteinander verrastet werden. Dabei muß der Dämpfungskörper mit einem Winkel armiert werden, um nicht von dem Gegenstück zerstört zu werden.

Es besteht daher die Aufgabe, eine Abstützvorrichtung der eingangs erwähnten Art zu schaffen, mit der große Toleranzen und/oder durch Temperaturschwankungen bedingte Längenänderungen gut aufgefangen werden können, wobei aber unerwünschte Klappergeräusche im Fahrbetrieb und eine separate Dämpfungsvorrichtung vermieden werden sollen.

Die Lösung dieser Aufgabe besteht bei einer gattungsgemäßen Abstützvorrichtung in den kennzeichnenden Merkmalen des Patentanspruches 1.

Es wird also entweder an einem feststehenden oder beweglichen Teil der Abstützvorrichtung selbst ein nachgiebiger Körper vorgesehen, der in Abstützposition unter Druck steht und dadurch auch elastisch verformbar ist und somit Längentoleranzen der Ladepritsche auffangen kann, aber Klappergeräusche aufgrund der von ihm ausgehenden Druck- beziehungsweise Reaktionskraft verhindert. Beim Absenken der Ladepritsche beaufschlagen sich die einander zugewandten Mantelbereiche des Druckkörpers und des Anschlages bzw. Vorsprunges. Durch weiteres Absenken der Ladepritsche in Abstützposition rastet die Abstützvorrichtung ein, wobei der Druckkörper den Anschlag bzw. Vorsprung untergreift. Dadurch läßt sich ein Klappern der Vorrichtung während der Fahrt vermeiden.

Ferner wird eine große Wirklänge entlang der Längserstreckungsrichtung des Druckkörpers und eine möglichst gleichmäßige materialschonende Absenkbewegung des Druckkörpers auf dem entsprechend vorgesehenen Bereich des Vorsprunges während des Abstützvorganges des Widerlagers erreicht.

Zweckmäßig ist es, wenn der Druckkörper an dem mit der Ladepritsche verbundenen Widerlager befestigt ist und das mit dem Druckkörper zusammenwirkende Gegenstück an dem feststehenden Auflagerteil des Fahrzeuges angeordnet ist. Dadurch ergibt sich eine besonders einfach zu realisierende Anordnung, bei der der Druckkörper den Kippvorgang nicht behindert und dennoch so groß sein kann, daß er aufgrund seiner Verformbarkeit ein möglichst großes Spiel ausgleichen kann. Dabei kann der Auflagerbolzen an dem feststehenden Auflagerteil vorgesehen sein.

Eine vorteilhafte Weiterbildung der Erfindung kann darin bestehen, daß der Druckkörper als drehbare, etwa parallel zur Schwenkachse orientierte Rolle ausgebildet ist. Dadurch kann der Druckkörper trotz der bei dem Schwenkvorgang auftretenden Druckkräfte mit geringerem Widerstand sowohl beim Absenken als auch beim Anheben der Ladepritsche an dem Gegenstück vorbeibewegt und sein Verschleiß gering gehalten werden.

Zweckmäßig ist es, wenn die Achse der Rolle etwa parallel zur Achse des Auflagerbolzens angeordnet ist, wobei der Auflagerbolzen an dem feststehenden Auflagerteil vorgesehen ist. Dadurch ergibt sich eine besonders gleichmäßige Kräfteverteilung entlang der Rolle.

Zweckmäßig ist es, wenn der Auflagerbolzen und die Achse des Druckkörpers in Fahrtrichtung orientiert sind. Dadurch wird in bekannter Weise auch ein seitliches Kippen der Ladepritsche um den Auflagerbolzen ermöglicht.
Vorteilhaft ist dabei, wenn der von dem Druckkörper in Gebrauchsstellung untergriffene Anschlag beziehungsweise Vorsprung etwa über die gesamte Länge der Abstützvorrichtung ausgedehnt und insbesondere länger als der Druckkörper ist. Dadurch wird trotz Längenänderungen der Ladepritsche der dadurch verstellte Druckkörper auf seiner ganzen Länge von dem Anschlag beziehungsweise Vorsprung übergriffen. Somit verteilen sich die auftretenden Druckkräfte auf die Länge des Druckkörpers.

Eine vorteilhafte Weiterbildung der Erfindung kann darin bestehen, daß die Achse des Druckkörpers auf einem Exzenter gelagert ist, mit dem der in Gebrauchsstellung vorhandene Abstand der Achse des Druckkörpers relativ zu dem als Gegenstück dienenden Anschlag oder Vorsprung verstellbar ist. Dadurch läßt sich die Abstützvorrichtung an unterschiedliche Fahrzeugabmessungen oder allmählich auftretenden Verschleiß anpassen. Zudem läßt sich zum Beispiel nach einer Montage und/oder nach längerem Betrieb die Druckkraft zwischen beiden Teilen einstellen oder nachstellen.

Eine besonders zweckmäßige Ausführungsform kann darin bestehen, daß der Anschlag oder Vorsprung ein Rundstab ist. Dadurch wird ein allmählicherer Übergang in Rastposition des Druckkörpers beim Absenken der Ladepritsche erreicht.

Vorteilhaft ist es, wenn der Anschlag oder Vorsprung zumindest in dem von dem Druckkörper in Gebrauchsstellung beaufschlagten Bereich eine abgerundete Außenkontur aufweist. Dabei kann eine besonders zweckmäßige Ausführungsform darin bestehen, daß der Anschlag oder Vorsprung ein Rundstab ist.
Dadurch wird ein allmählicherer Übergang in Rastposition des Druckkörpers beim Absenken der Ladepritsche erreicht.

Zweckmäßig ist es, wenn der Druckkörper in Längserstreckungsrichtung des von ihm in Gebrauchsstellung beaufschlagten Anschlages oder Vorsprunges insbesondere beidseits seiner Enden ein Spiel aufweist. Dadurch werden die in Längsrichtung des Anschlages oder Vorsprunges auftretenden Längenänderungen der Ladepritsche nicht behindert, aber die Dämpfung bleibt unabhängig von diesen Wärmebewegungen aufrechterhalten.

Vorteilhaft ist es, wenn der in Gebrauchsstellung den Auflagerbolzen übergreifende Langschlitz etwa quer zur Längsrichtung des Auflagerbolzens ein Seitenspiel aufweist. Dadurch können quer zur Längsrichtung des Auflagerbolzens auftretende Längenänderungen der Ladepritsche ausgeglichen werden, wobei der Vorteil der Geräuschdämpfung trotzdem erhalten bleibt.

Zwischen dem Anschlag und dem Druckkörper kann zumindest Linienberührung oder eine in Erstreckungsrichtung des Druckkörpers orientierte längliche Flächenberührung bestehen. Somit ergibt sich eine größere Dämpfungsfläche als bei einer Berührung mit einer Kugel.

Nachstehend ist ein Ausführungsbeispiel der Erfindung mit ihren ihr als wesentlich zugehörenden Einzelheiten anhand der Zeichnung näher beschrieben.

Die einzelnen Merkmale können je für sich oder zu mehreren bei einer Ausführungsform der Erfindung verwirklicht sein.

Es zeigt in z.T. schematisierter Darstellung:
- Fig. 1: eine Seitenansicht eines Fahrzeuges mit zwischen Fahrgestell und Ladepritsche angeordneter erfindungsgemäßer Abstützvorrichtung,
- Fig. 2: eine teilweise im Schnitt gehaltene Ansicht der Abstützvorrichtung bei um eine Seitenlängsachse gekipptem Querträger einer Ladepritsche, wobei eine zweite Abstützvorrichtung als Schwenklager dient,
- Fig.3: eine etwa Fig.2 entsprechende Ansicht, wobei der Querträger der Ladepritsche abgesenkt und abgestützt ist,
- Fig.4: eine in vergrößertem Maßstab gehaltene Seitenansicht der aus feststehendem Auflagerteil und Widerlager bestehenden Abstützvorrichtung nach Fig.1,
- Fig.5: eine Fig.4 entsprechende Ansicht, nur des den Auflagerbolzen aufweisenden Teiles,
- Fig.6: eine Seitenansicht des Widerlagers mit Druckkörper und
- Fig.7: eine Draufsicht des Widerlagers.

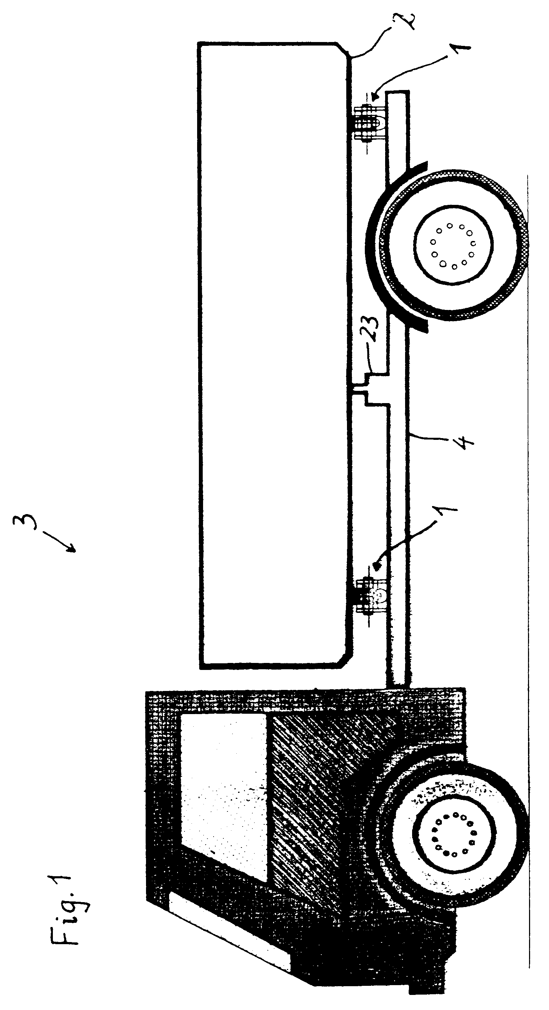

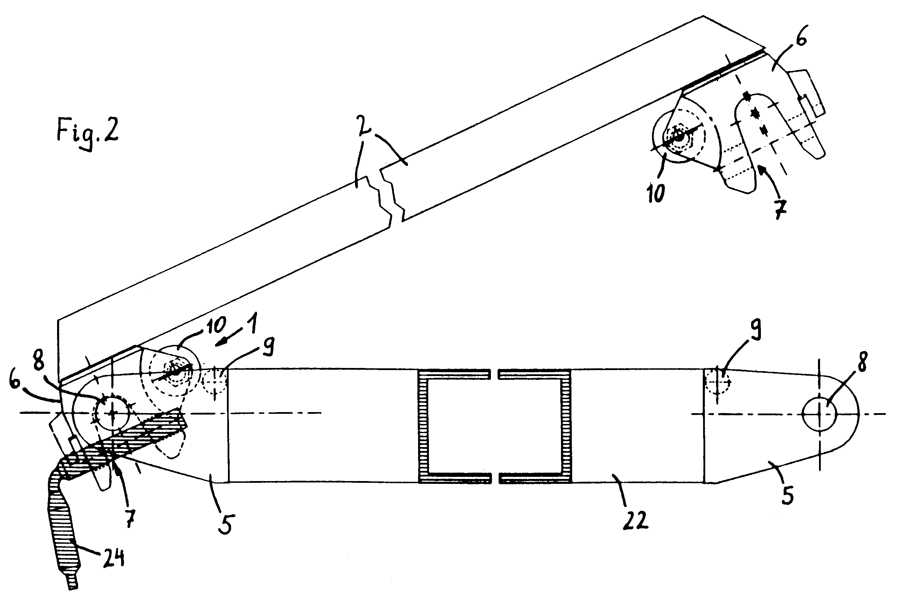

Eine in Figur 1 im ganzen mit 1 bezeichnete Abstützvorrichtung dient zum Abstützen von Ladepritschen 2, die an Last- beziehungsweise Nutzfahrzeugen 3 angeordnet sind. Eine solche Ladepritsche 2 ist wenigstens um eine Achse auf einem Fahrgestell 4 kippbar beziehungsweise schwenkbar gelagert. Zum Anheben der Ladepritsche 2 greift an deren Boden zentral ein Hubzylinder 23 an. Die Abstützvorrichtungen 1 sind zwischen Fahrgestell 4 und Ladepritsche 2 jeweils etwa bei den Eckbereichen der Ladepritsche 2 angeordnet und weisen, wie Figur 2 zeigt, jeweils ein feststehendes, an einem Querträger 22 des Fahrgestells 4 befestigtes Auflagerteil 5 und ein an der Ladepritsche 2 angebrachtes Widerlager 6 auf.

Die Abstützvorrichtungen 1 sind für den Kippvorgang mit Sperrbolzen 24 entriegelbar. Dabei wird auf derjenigen Seite, nach der gekippt werden soll, die Arretierung durch die Sperrbolzen beibehalten, während auf der gegenüberliegenden Seite die Sperrbolzen 24 herausgezogen werden. Im Ausführungsbeispiel dienen die Abstützvorrichtungen 1 an der Schwenkachse als Schwenklager und auf der der Schwenkachse entgegengesetzten Seite zum Abstützen der Ladepritsche 2. Das Widerlager 6 weist an einer Seite einen randoffenen gabelförmigen Langschlitz 7 zum Übergreifen eines Auflagerbolzens 8 auf, der an dem feststehenden Auflagerteil 5 angeordnet ist.

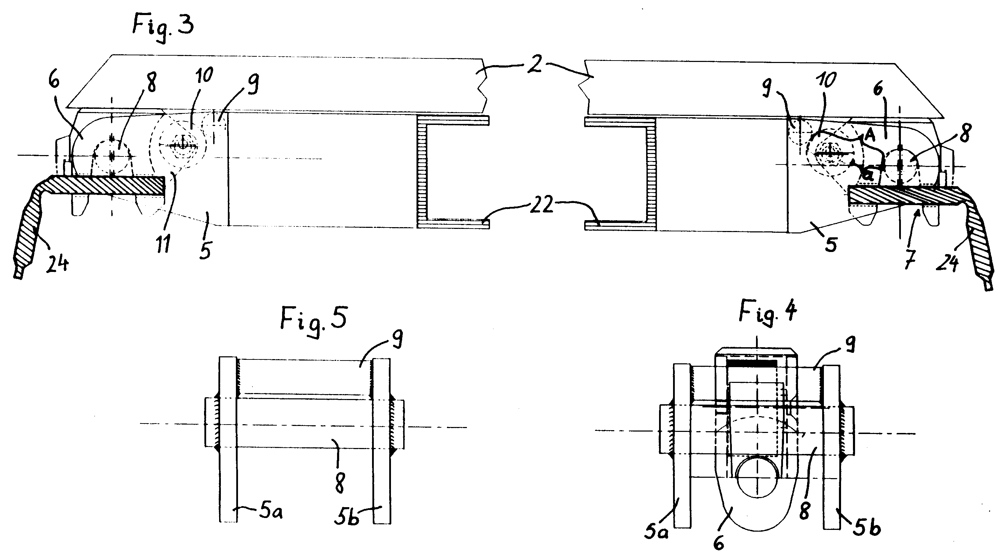

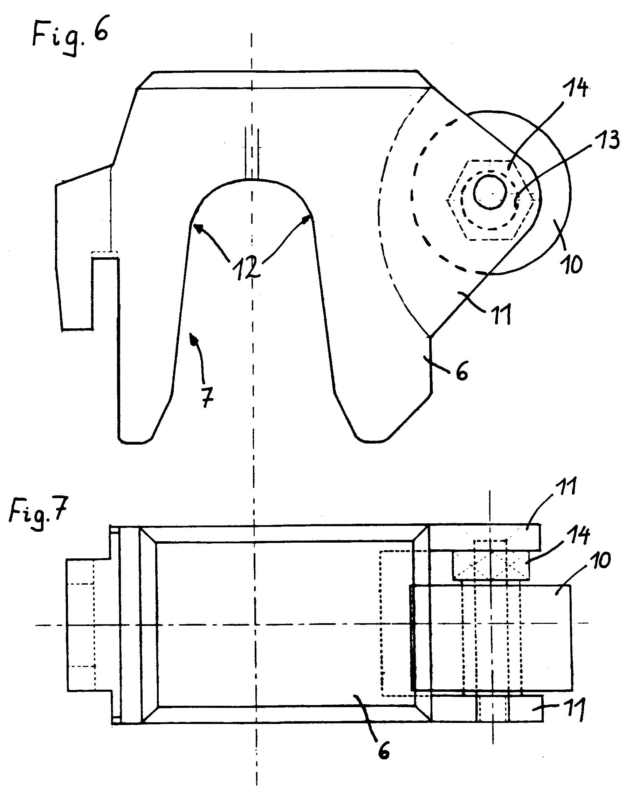

An dem feststehenden Auflagerteil 5 der Abstützvorrichtung 1 ist ein Anschlag oder Vorsprung 9 und an dem Widerlager 6 ein Druckkörper 10 so angeordnet, daß der Anschlag oder Vorsprung 9 und der Druckkörper 10 beim Absenken der Ladepritsche 2 (Figur 3) und des daran befestigten Widerlagers 6 relativ zueinander gegeneinander bewegt werden. Der Druckkörper 10 besteht aus einem zusammendrückbaren, elastisch verformbaren Werkstoff mit kreisförmigem Querschnitt und ist im Ausführungsbeispiel als Rolle ausgebildet, die in ihrer Längserstreckungsrichtung von zwei beabstandeten Haltern 11 drehbar gehalten wird, die - im Ausführungsbeispiel einstückig - mit dem Widerlager 6 verbunden sind und an einer der Anlageseiten des gabelförmigen Langschlitzes 7 angeordnet sind. Wie Figur 4 zeigt, ist die Achse des Druckkörpers 10 in Gebrauchsstellung etwa parallel zur Achse des Auflagerbolzens 8 angeordnet. An beiden Enden des Auflagerbolzens 8 sind jeweils Seitenbegrenzungsflansche 5a, 5b des feststehenden Teils 5 (Figur 5) angeordnet, durch die die Abstützvorrichtung 1 an dem Fahrgestell 4 befestigt ist. Im Ausführungsbeispiel sind der Auflagerbolzen 8 und die Achse des Druckkörpers 10 in Fahrtrichtung orientiert.

Beim Absenken der Ladepritsche taucht das Widerlager 6 zwischen die durch den Auflagerbolzen 8 beabstandeten Seitenbegrenzungsflansche 5a, 5b ein und übergreift mit dem randoffenen gabelförmigen Langschlitz 7 den Auflagerbolzen 8, wobei sich der an dem Widerlager 6 drehbar angeordnete Druckkörper 10 an dem als Gegenstück fungierenden Anschlag oder Vorsprung 9 entlangbewegt. Für einen verschleißarmen Betrieb weist der Anschlag oder Vorsprung 9 auf dem von dem Druckkörper 10 während des Absenkvorgangs beaufschlagten Bereiches eine abgerundete Außenkontur auf. Im Ausführungsbeispiel ist der Anschlag oder Vorsprung 9 als Rundstab ausgebildet.

Der Druckkörper 10 hat eine solche radiale Ausdehnung, daß er beim Absenken des Widerlagers 6 etwa in der Höhe, wo sich Druckkörper 10 und Anschlag beziehungsweise Vorsprung 9 bereichsweise beaufschlagen, elastisch verformt beziehungsweise gedrückt wird. Beim weiteren Absenken des Widerlagers 6 bewegt sich der Druckkörper 10 an dem Anschlag beziehungsweise Vorsprung 9 entlang und untergreift schließlich rastend in Richtung der Schwenkachse den Anschlag beziehungsweise Vorsprung 9. In dieser Stellung steht das Widerlager 6 und der als Rolle ausgebildete Druckkörper 10 unter einer in Richtung der Schwenkachse wirkenden Zugkraft. Der Druckkörper 10 bleibt somit in Gebrauchsstellung verformt. Auftretende Längenänderungen der Ladepritsche 2 beispielsweise aufgrund von Temperaturschwankungen oder während des Fahrbetriebes auftretende Rüttelbewegungen können somit durch mehr oder weniger starke Deformationen des Druckkörpers 10 an dem Anschlag oder Vorsprung 9 aufgefangen werden, ohne daß dabei unerwünschte Klappergeräusche auftreten.

Wie Figur 4 und 5 zeigen, erstreckt sich der Anschlag oder Vorsprung 9, der von dem Druckkörper 10 in Gebrauchsstellung untergriffen wird, über die gesamte Länge der Abstützvorrichtung 1, d.h. über den Abstand, den die Seitenbegrenzungsflansche 5a, 5b zueinander haben. Da der Druckkörper 10 in seiner axialen Richtung eine geringere Abmessung als die Länge des Anschlages oder Vorsprunges 9 aufweist (Figur 4 und 7) und in Gebrauchsstellung beidseits seiner beiden Enden ein Spiel zu den Seitenbegrenzungsflanschen 5a, 5b hat, können somit Relativverschiebungen des Widerlagers 6 gegenüber dem feststehenden Auflagerteil 5 erfolgen, wobei die Anlage des Druckkörpers 10 am Anschlag bzw. Vorsprung 9 und somit die Dämpfungswirkung der Abstützvorrichtung 1 in Abstützstellung erhalten bleibt. Diese Relativverschiebungen können durch Längenänderungen der mit dem Widerlager 6 verbundenen Ladepritsche 2 verursacht werden. Die Längenänderungen betreffen Wärmedehnungen der Ladepritsche 2 in Achsrichtung des Anschlages oder Vorsprunges 9 und des Auflagerbolzens 8.

Der Langschlitz 7, mit dem das Widerlager 6 den im Querschnitt runden Auflagerbolzen 8 in Gebrauchsstellung übergreift, weist in dem Bereich, der den Auflagerbolzen 8 beaufschlagt, eine etwa kreisbogenförmige Krümmung auf, die sich mit den Anlageseiten 12 des Langschlitzes 7 nach außen hin verbreitert (vgl. Figur 6). Die Krümmung dieses Bereiches des Langschlitzes 7 ist etwas größer als die Krümmung des Mantelbereiches des Auflagerbolzens 8, der in Gebrauchsstellung dort beaufschlagt wird. Dadurch ergibt sich in Gebrauchsstellung ein Spiel der beiden Anlageseiten 12 zu der zwischen ihnen liegenden Durchmesserebene des Auflagerbolzens 8. Quer zur Achsrichtung des Auflagerbolzens 8 auftretende Längenänderungen der Ladepritsche 2 können dadurch ausgeglichen werden.

Trotz dieser Bewegungsmöglichkeiten wird ein Klappern unterdrückt, weil die Halter 11 des Widerlagers 6 jeweils einen Exzenter 13 aufweisen, auf dem die Achse des Druckkörpers 10 gelagert ist (vgl. Figur 6). Dadurch kann in Gebrauchsstellung der Abstand, den die Achse des Druckkörpers 10 relativ zu dem Anschlag beziehungsweise Vorsprung 9 hat, verstellt und mit einer an einem der Halter 11 angeordneten Feststellschraube 14 fixiert werden (vgl. Fig.7). Die Abstützvorrichtung 1 läßt sich somit an möglichen Materialverschleiß, beispielsweise durch Materialabrieb des Druckkörpers 10, anpassen. Es läßt sich auch die Druckkraft zwischen Druckkörper 10 und Anschlag beziehungsweise Vorsprung 9 in Gebrauchsstellung nach einer Montage und/oder längerem Betrieb der Abstützvorrichtung 1 durch Verstellen des relativen Abstandes zwischen beiden Teilen einstellen oder nachstellen. In Gebrauchsstellung sind die Abstände zwischen Auflagerbolzen 8 und Anschlag beziehungsweise Vorsprung 9 einerseits und zwischen Auflagerbolzen 8 und Druckkörper 10 andererseits so bemessen, daß der lichte Abstand A zwischen den einander zugewandten Mantelbereichen von Auflagerbolzen 8 und Anschlag beziehungsweise Vorsprung 9 etwas kleiner ist wie die Summe des lichten Abstandes a, den Auflagerbolzen 8 und Druckkörper 10 haben, und dem Durchmesser des Druckkörpers 10. Eine genauere Bemessung dieser Relation hängt von dem Kompressionsmodul des Druckkörpers 10 ab.

Aufgrund der Ausgestaltung des Druckkörpers 10 und des mit ihm in Gebrauchsstellung zusammenwirkenden Anschlages oder Vorsprunges 9 besteht in vorteilhafter Weise zwischen Druckkörper 10 und Vorsprung 9 in Dämpfungsstellung zumindest Linienberührung bzw. eine in Erstreckungsrichtung des Druckkörpers 10 lange oder längliche Flächenberührung. Somit kann eine größere Dämpfungsfläche als bei einer Berührung mit einer Kugel geschaffen werden.

Die Abstützvorrichtung 1 dient zum Abstützen von Ladepritschen 2, die um wenigstens eine Schwenkachse kippbar sind. Die Abstützvorrichtung 1 ist im abgesenkten Zustand auf der der Schwenkachse entgegengesetzten Seite aufgelagert und abgestützt. Sie weist dazu einen Auflagerbolzen 8 und ein Widerlager 6 auf, welches einen einseitig offenen Langschlitz 7 zum Übergreifen des Auflagerbolzens 8 hat. Entweder an dem Widerlager 6 oder einem feststehendem Auflagerteil 5 der Abstützvorrichtung 1 ist ein Anschlag oder Vorsprung 9 und an dem Gegenstück dazu ein Druckkörper 10 angeordnet. Anschlag beziehungsweise Vorsprung 9 und Druckkörper 10 sind beim Absenken der Ladepritsche 2 relativ zueinander gegeneinander bewegbar und sind in Lager- beziehungsweise Abstützstellung aneinander gedrückt. Der Druckkörper 10 weist eine kreisförmige Außenkontur auf und untergreift den Anschlag oder Vorsprung 9 in Abstützstellung. Nach einer bevorzugten Ausführungsform ist der Druckkörper 10 als drehbare Rolle ausgebildet, die etwa parallel zur Schwenkachse orientiert ist.

## Patentansprüche

1. Abstützvorrichtung (1) für eine um wenigstens eine Schwenkachse kippbare Ladepritsche (2) oder dergleichen eines Fahrzeuges (3) an der der Schwenkachse entgegengesetzten Seite, auf welcher Abstützvorrichtung (1) die Ladepritsche (2) in abgesenktem Zustand aufgelagert und abgestützt ist, mit einem Auflagerbolzen (8) und mit einem Widerlager (6), welches einen einseitig offenen Langschlitz (7) zum Übergreifen des Auflagerbolzens (8) aufweist, wobei entweder an dem Widerlager (6) oder einem feststehenden Auflagerteil (5) der Abstützvorrichtung (1) wenigstens ein Anschlag (9) und an dem Gegenstück dazu wenigstens ein Druckkörper (10) aus zusammendrückbarem Werkstoff angeordnet sind und beim Absenken der Ladepritsche (2) der Anschlag (9) und der Druckkörper (10) derart relativ zueinander und gegeneinander bewegbar sind, daß sie in Lager- bzw. Abstützposition aneinandergedrückt sind, **dadurch gekennzeichnet**, daß der Druckkörper (10) eine kreisförmige Außenkontur hat oder als Zylinder ausgebildet ist, dessen Achse etwa parallel zur Achse des Auflagerbolzens (8) angeordnet ist, daß der Anschlag oder Vorsprung (9) zumindest in dem von dem Druckkörper (10) in Gebrauchsstellung beaufschlagten Bereich eine gerundete Außenkontur aufweist, die der Druckkörper (10) in Gebrauchsstellung untergreift, und daß der lichte Abstand (A) zwischen den einander zugewandten Mantelbereichen von Auflagerbolzen (8) und Anschlag oder Vorsprung (9) etwas kleiner als die Summe des lichten Abstandes (a), den Auflagerbolzen (8) und Druckkörper (10) haben, und dem Durchmesser des Druckkörpers (10) ist.

2. Abstützvorrichtung nach Anspruch 1, dadurch gekennzeichnet, daß der Druckkörper (10) an dem mit der Ladepritsche (2) verbundenen Widerlager (6) befestigt und der mit dem Druckkörper (10) zusammenwirkende Anschlag oder Vorsprung (9) an dem feststehenden Auflagerteil (5) des Fahrzeuges angeordnet ist.

3. Abstützvorrichtung nach Anspruch 1 oder 2, dadurch gekennzeichnet, daß der Auflagerbolzen (8) an dem feststehenden Auflagerteil (5) vorgesehen ist.

4. Abstützvorrichtung nach einem der Anprüche 1 bis 3, dadurch gekennzeichnet, daß der Druckkörper (10) als drehbare, etwa parallel zur Schwenkachse orientierte Rolle ausgebildet ist.

5. Abstützvorrichtung nach einem der Ansprüche 1 bis 4, dadurch gekennzeichnet, daß der Auflagerbolzen (8) und die Achse des Druckkörpers (10) in Fahrtrichtung orientiert sind.

6. Abstützvorrichtung nach einem der Ansprüche 1 bis 5, dadurch gekennzeichnet, daß der von dem Druckkörper 810) in Gebrauchsstellung untergriffene Anschlag beziehungsweise Vorsprung (9) etwa über die gesamte Länge der Abstützvorrichtung (1) ausgedehnt und insbesondere länger als der Druckkörper (10) ist.

7. Abstützvorrichtung nach einem der Ansprüche 1 bis 6, dadurch gekennzeichnet, daß die Achse des Druckkörpers (10) auf einem Exzenter (13) gelagert ist, mit dem der in Gebrauchsstellung vorhandene Abstand der Achse des Druckkörpers (10) relativ zu dem als Gegenstück dienenden Anschlag oder Vorsprung (9) verstellbar ist.

8. Abstützvorrichtung nach einem der Ansprüche 1 bis 7, dadurch gekennzeichnet, daß der Anschlag oder Vorsprung (9) ein Rundstab ist.

9. Abstützvorrichtung nach einem der Ansprüche 1 bis 8, dadurch gekennzeichnet, daß der Druckkörper (10) in Längserstreckungsrichtung des von ihm in Gebrauchsstellung beaufschlagten Anschlages oder Vorsprunges (9) insbesondere beidseits seiner Enden ein Spiel aufweist.

10. Abstützvorrichtung nach einem der Ansprüche 1 bis 9, dadurch gekennzeichnet, daß der in Gebrauchsstellung den Auflagerbolzen (8) übergreifende Langschlitz (7) etwa quer zur Längsrichtung des Auflagerbolzens (8) ein Seitenspiel aufweist.

11. Abstützvorrichtung nach einem der Ansprüche 1 bis 10, dadurch gekennzeichnet, daß zwischen dem Anschlag (9) und dem Druckkörper (10) zumindest Linienberührung oder eine in Erstreckungsrichtung des Druckkörpers (10) orientierte längliche Flächenberührung besteht.

## Claims

1. A support device (1) for a loading platform (2) or the like for a vehicle (3), wherein said loading platform (2) or the like is adapted to tip about at least one swivel axis and said support device (1) bears and supports the lowered loading platform (2) on the side opposite the swivel axis, including a supporting bolt (8) and an abutment (6) having an elongated slot (7) open on one side for engaging over said supporting bolt (8), wherein arranged either on the abutment (6) or on a stationary supporting member (5) of the support device (1) is at least one stop (9) and on the companion part is at least one pressure body (10) of compressible material, and, as the loading platform (2) is lowered, the stop (9) and the pressure body (10) are movable relative to each other and against each other in such a way as to be urged together in the bearing or supporting position, **characterized in that** the pressure body (10) has a circular outer contour or takes the form of a cylinder whose axis is arranged approximately parallel to the axis of the supporting bolt (8), that the stop or projection (9) has - at least in the area acted upon by the pressure body (10) in the position of use - a rounded outer contour which the pressure body (10) engages under in the position of use, and that the clearance (A) between the confronting surface areas of supporting bolt (8) and stop or projection (9) is somewhat smaller than the sum of the clearance (a) between supporting bolt (8) and pressure body (10) and the diameter of the pressure body (10).

2. A support device as claimed in claim 1, characterized in that the pressure body (10) is mounted on the abutment (6) connected to the loading platform (2) and the stop or projection (9) co-operating with the pressure body (10) is arranged on the stationary supporting member (5) of the vehicle.

3. A support device as claimed in claim 1 or claim 2, characterized in that the supporting bolt (8) is provided on the stationary supporting member (5).

4. A support device as claimed in any one of claims 1 to 3, characterized in that the pressure body (10) takes the form of a rotatable roll oriented approximately parallel to the swivel axis.

5. A support device as claimed in any one of claims 1 to 4, characterized in that the supporting bolt (8) and the axis of the pressure body (10) are oriented in the direction of travel.

6. A support device as claimed in any one of claims 1 to 5, characterized in that the stop or projection (9) under which the pressure body (10) engages in the position of use extends substantially throughout the length of the support device (1) and in particular is longer than the pressure body (10).

7. A support device as claimed in any one of claims 1 to 6, characterized in that the axis of the pressure body (10) is mounted on an eccentric (13) permitting adjustment of the distance the axis of the pressure body (10) has in the position of use relative to the stop or projection (9) serving as companion part.

8. A support device as claimed in any one of claims 1 to 7, characterized in that the stop or projection (9) is a rod.

9. A support device as claimed in any one of claims 1 to 8, characterized in that the pressure body (10) has play in the direction in which the stop or projection (9) acted upon thereby in the position of use extends longitudinally, in particular said pressure body has play on both sides of its ends.

10. A support device as claimed in any one of claims 1 to 9, characterized in that the elongated slot (7) engaging over the supporting bolt (8) in the position of use has lateral play approximately crosswise to the longitudinal direction of the supporting bolt (8).

11. A support device as claimed in any one of claims 1 to 10, characterized in that there is at least line contact between the stop (9) and the pressure body (10) or there is an elongate area contact oriented in the direction in which the pressure body (10) extends.

## Revendications

1. Dispositif d'appui (1) destiné à une plateforme de chargement (2) ou similaire d'un véhicule (3), laquelle peut basculer autour d'au moins un axe de pivotement, pour son appui opposé à l'axe de pivotement, la plateforme de chargement (2) étant supportée et appuyée sur ce dispositif d'appui (1) lorsqu'elle est abaissée, comprenant un goujon de support (8), et comprenant un contre-appui (6) qui présente une fente longitudinale (7) ouverte d'un côté en vue de coiffer le goujon de support (8), cependant qu'au moins une butée (9) est disposée sur le contre-appui (6) ou sur une partie d'appui fixe (5) du dispositif d'appui (1), et qu'au moins un corps de serrage (10) en matière compressible est disposé sur la partie conjugée, la butée (9) et le corps de serrage (10) pouvant être déplacés l'un par rapport à l'autre et l'un vers l'autre d'une manière telle que, lorsque la plateforme de chargement (2) est abaissée, ils soient serrés l'un contre l'autre en position de venue en prise ou d'appui, respectivement, caractérisé par le fait que le corps de serrage (10) présente un contour extérieur en forme de cercle ou qu'il est réalisé sous la forme d'un cylindre dont l'axe est disposé à peu près parallèlement à l'axe du goujon de support (8), par le fait que la butée ou la partie en saillie (9), du moins dans la région soumise à l'action du corps de serrage (10) dans la position d'utilisation, présente un contour extérieur arrondi avec lequel le corps de serrage (10) vient en prise par-dessous dans la position d'utilisation, et par le fait que la distance libre (A) entre les zones latérales tournées l'une vers l'autre du goujon de support (8) et de la butée ou de la partie en saillie (9) est légèrement inférieure à la somme de la distance libre (a) entre le goujon de support (8) et le corps de serrage (10) et du diamètre du corps de serrage (10).

2. Dispositif d'appui selon la revendication 1, caractérisé par le fait que le corps de serrage (10) est fixé au contre-appui (6) qui est relié à la plateforme de chargement (2), et que la butée ou la partie en saillie (9) qui coopère avec le corps de serrage (10) est disposée sur la partie d'appui fixe (5) du véhicule.

3. Dispositif d'appui selon la revendication 1 ou 2, caractérisé par le fait que le goujon de support (8) est prévu sur la partie d'appui fixe (5).

4. Dispositif d'appui selon l'une des revendications 1 à 3, caractérisé par le fait que le corps de serrage (10) est réalisé sous la forme d'un rouleau tournant qui est orienté à peu près parallèlement à l'axe de pivotement.

5. Dispositif d'appui selon l'une des revendications 1 à 4, caractérisé par le fait que le goujon de support (8) et l'axe du corps de serrage (10) sont orientés dans la direction de la marche du véhicule.

6. Dispositif d'appui selon l'une des revendications 1 à 5, caractérisé par le fait que la butée ou la partie en saillie (9), respectivement, avec laquelle le corps de serrage (10) est en prise par-dessous dans la position d'utilisation s'étend à peu près sur toute la longueur du dispositif d'appui (1), et qu'elle est en particulier plus longue que le corps de serrage (10).

7. Dispositif d'appui selon l'une des revendications 1 à 6, caractérisé par le fait que l'axe du corps de serrage (10) est monté sur un excentrique (13) au moyen duquel on peut régler la distance qui existe dans la position d'utilisation entre l'axe du corps de serrage (10) et la butée ou la partie en saillie (9) servant de pièce conjuguée.

8. Dispositif d'appui selon l'une des revendications 1 à 7, caractérisé par le fait que la butée ou la partie en saillie (9) est une tige ronde.

9. Dispositif d'appui selon l'une des revendications 1 à 8, caractérisé par le fait que le corps de serrage (10) présente un jeu dans la direction de l'étendue dans le sens longitudinal de la butée ou de la partie en saillie (9) qui est soumise à son action dans la position d'utilisation, en particulier des deux côtés de ses extrémités.

10. Dispositif d'appui selon l'une des revendications 1 à 9, caractérisé par le fait que la fente longitudinale (7) qui coiffe le goujon de support (8) dans la position d'utilisation présente un jeu latéral à peu près transversalement par rapport à la direction longitudinale du goujon de support (8).

11. Dispositif d'appui selon l'une des revendications 1 à 10, caractérisé par le fait qu'il existe entre la butée (9) et le corps de serrage (10) au moins un contact selon une ligne ou un contact selon une surface allongée qui est orientée dans la direction de l'étendue du corps de serrage (10).
